# EUROPEAN PATENT APPLICATION

(11) **EP 2 003 605 A1**
(43) Date of publication of application: **17.12.2008**
(21) Application number: 08010786.5
(22) Date of filing: 13.06.2008
(51) Int. Cl.: G06Q 20/00

(54) **System and method for recording and paying with credit cards and the like**

(30) Priority: 13.06.2007 IT MI20071194
(71) Applicant: EKO Mobile S.R.L., 25122 Brescia (IT)
(72) Inventor: Dionisio, Ermanno, 25122 Brescia (IT)
(74) Representative: Garavelli, Paolo

(57) **Abstract**

System for recording and paying with credit cards and the like, comprising a mobile telephone device and a POS identifying a seller, characterised in that it comprises means for recording identifying data associated with one or more credit cards in said mobile telephone device, storage means adapted to store said identifying data, said identifying data being accessible to a user during a payment request step through personal identification means, entry means being provided to enter an amount to be paid and a seller's POS code, the payment request being sent to means for authenticating and confirming said request.

## Description

The present invention deals with a system and a method for recording and paying with credit cards and the like.

It is known that during our daily life it often happens that one has to purchase an object by paying it with credit cards, bancomat and the like. Usually, the payment procedure consists in passing the magnetic band placed on a credit card face into a POS (Point Of Sale) apparatus that, communicating with the credit institute related to the card itself or with an authorised centre, verifies the validity of the card (not before the user has inserted the PIN (Personal Identification Number) code identifying the same), authorises the payment and receives a confirmation, that is then printed as a receipt. In practice, what happens during the communication step between credit card and credit institute through the POS is simply a money transaction, that is credited on the seller account and consequently debited on the credit card user's account.

The risk that is run in this type of situations is represented by the fact that the credit card has to be compulsorily handled, such card usually being taken by the seller that takes care of sliding it in the POS communication device. The credit card, usually subjected to thefts and cloning, must then be passed in the hands of unknown people, that could be a potential danger for the card owner since an improper use of the card could be made. For example, as stated, the card could be cloned, or the card data could simply be written by the seller and used for example for Internet transactions.

The main object of the present invention is solving the above cited inconveniences, by devising a system and a method for recording and paying with credit cards or the like that avoid the passage of the card from user to seller for its insertion in the POS device, or anyway to other people.

Within this object, a purpose of the present invention is proposing a system and a method for recording and paying with credit cards and the like that can be simply devised and that ensure maintaining the privacy on personal data dealing with identifying and PIN codes of the credit card itself.

Another purpose of the present invention is implementing a system and a method for recording and paying with credit cards and the like that allow a realisation with competitive costs.

These and other purposes, that will be better pointed out herein below, are obtained with a system for recording and paying with credit cards and the like, comprising a mobile telephone device and a POS identifying a seller, characterised in that it comprises means for recording identifying data associated with one or more credit cards in said mobile telephone device, storage means adapted to store said identifying data, said identifying data being accessible to a user during a payment request step through personal identification means, entry means being provided to enter an amount to be paid and a seller's POS code, the payment request being sent to means for authenticating and confirming said request.

Further characteristics and advantages of the invention will be better appear from the description of a preferred, but not exclusive, embodiment of a payment system and method according to the invention, shown, as a non-limiting example, in the enclosed drawings, in which:
figure 1 shows a block diagram of the payment system according to the invention;
figure 2 shows an example of recording of data associated with a credit card or the like in the system according to the invention.

With reference to the cited figures, the recording and payment system according to the invention, globally designated with reference number 100, comprises an initial menu 101 through which access is made to the software functionalities for recording one or more credit cards.

This occurs due to a software integrated in the GSM/UMTS/CDMA/HSPDA SIM (Subscriber Identification Module) card of any mobile and fixed telephone operator, or in an external memory card of a cellular phone.

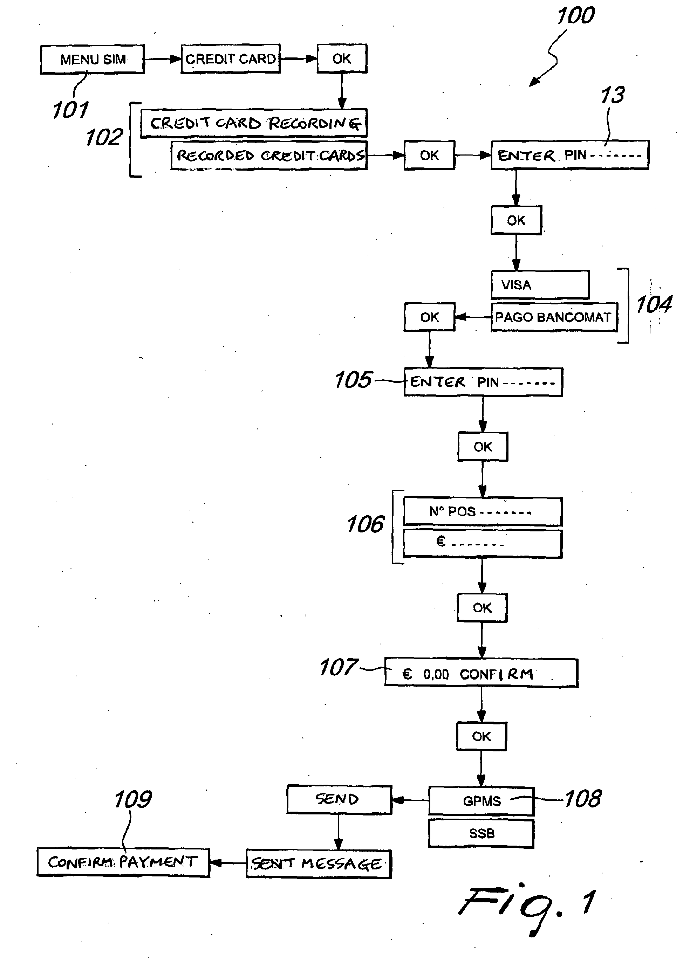

In particular, supposing as in figure 1 that credit cards have already been recorded and one has to proceed with the payment, the user can have access to entered data through personal identification means. For such purpose, if in the menu mask 102 one selects the "recorded credit cards" items, access is made to means 103 comprising an interactive mask in which a PIN code is requested, that is invented and therefore known only and exclusively by the user.

If many credit cards are recorded in the memory of the dedicated SIM card, such software provides the chance, in a screen 104, of selecting which card has to be used.

Afterwards, in a mask 105, entry of the credit card PIN code is requested, which is followed by the entry of the amount to be paid and the POS code identifying the seller through entry means, represented by a screen 106. An amount confirmation request 107 is then requested by the software to the user, the user then sending through SMS/EMS/MMS the payment request 108.

This request is received by authenticating means, comprising an authorising service centre, which receives the payment request coming from the mobile telephone device, verifies its validity and, in case of validation of the request, sends the confirmation of performed payment to the seller's POS device.

It can be noted how the physical presence of the card is not necessary in this type of system according to the invention. This particular conception of payment system and method in fact allows no one to handle the card from the really physical point of view, strongly limiting the risk of an improper use by ill-oriented people.

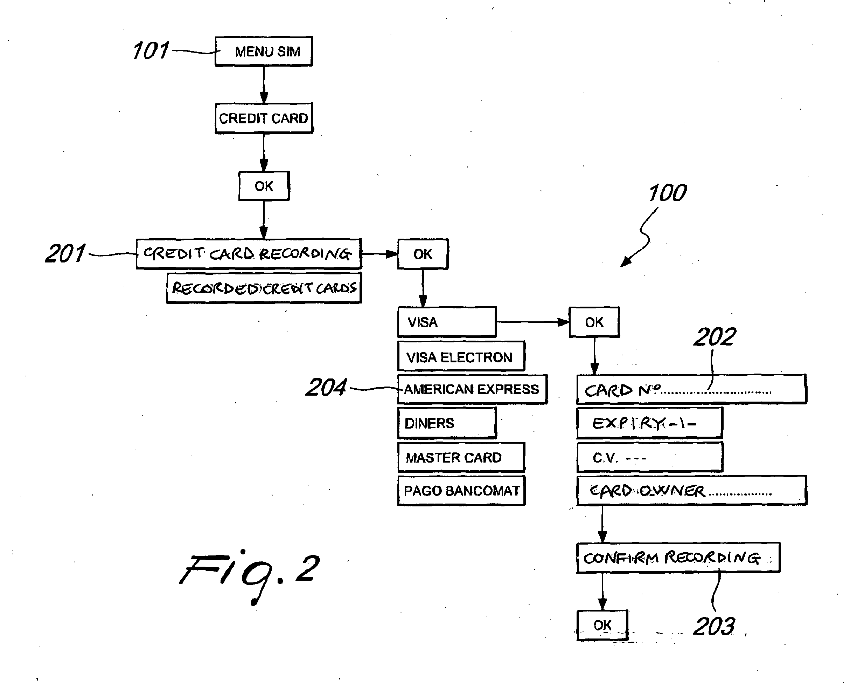

The recording of a credit card is schematised in figure 2, in which, always starting from the main menu 101 and the mask for selecting between credit card payment procedure and credit card recording procedure 102, the selected item is now "credit card recording".

This selection makes the user access to means for recording data identifying one or more credit cards, comprising an interactive software screen in which the user is invited to provide a series of data in such an amount as to univocally identify the affected credit card.

It must be noted that there are a list of credit card circuits 204 supported by software. This screen appears before entering card-identifying data.

With reference to figure 2, these recording means are schematised by mask 202. A following request of confirmation of entered data 203 is then displayed.

Once having given the confirmation, entered data are kept in a non-volatile way in the storage area dedicated inside the SIM card of the mobile telephone device.

In practice, it has been observed how the system and method for recording and paying with credit cards and the like according to the invention fully obtain the pre-set objects and purposes, since the physical presence of the credit card is not required during payments, the card identifying data being already present inside the SIM card of the cellular telephone.

This is a strong decrease of the risk of an improper use of the card itself. Moreover, the simple and immediate menu used in the interactive software makes such system and method intuitive and easily used.

## Claims

**1.** System for recording and paying with credit cards and the like, comprising a mobile telephone device and a POS identifying a seller, **characterised in that** it comprises means for recording identifying data associated with one or more credit cards in said mobile telephone device, storage means adapted to store said identifying data, said identifying data being accessible to a user during a payment request step through personal identification means, entry means being provided to enter an amount to be paid and a seller's POS code, the payment request being sent to means for authenticating and confirming said request.

**2.** System for recording and paying according to claim 1, **characterised in that** said means for recording identifying data associated with a credit card in said mobile telephone device comprise an interactive software provided with means for entering said credit card identifying data.

**3.** System for recording and paying according to claim 1, **characterised in that** said storage means comprise a reserved memory area in the SIM card of said mobile telephone device.

**4.** System for recording and paying according to claim 1 or 2, **characterised in that** said personal identification means comprise a menu included in said integrated software where a user enters a PIN code different from the PIN code identifying the credit card.

**5.** System for recording and paying according to claim 1, **characterised in that** said means for authenticating and confirming the payment request comprise an authorising service centre, that receives the payment request sent through SMS/EMS/MMS by said mobile telephone device and validates it, said authorising centre crediting the seller's account.

**5.** System for recording and paying according to claim 1 or 2, **characterised in that** said entering means comprise a menu included in said software that allows entering said code and said amount through the keyboard of said mobile telephone device.

**6.** Method for recording and paying with credit cards and the like, **characterised in that** it comprises the steps of:
- entering identifying data of one or more credit cards in a mobile telephone device;
- storing said identifying data of a SIM card of the mobile telephone device;
- entering a PIN code identifying the credit card user for accessing said identifying data;
- entering a PIN code coupled with said credit card;
- entering an amount to be paid and a code of a seller's POS device;
- sending, to an authorising service centre, through the mobile telephone device, a payment request;
- receiving a confirmation of performed payment on the POS device.

**7.** Method for recording and paying according to claim 6, **characterised in that** it comprises the step in which said authorising service centre receives the payment request, verifies the credit card validity and authorises the transaction.

**8.** Method for recording and paying according to claim 6, **characterised in that** the transmission of the payment request occurs through SMS/EMS/MMS.

**9.** Method for recording and paying according to claim 6, **characterised in that** entering data identifying the credit card, entering user's and card's PIN codes, and entering the amount to be paid in addition to the seller's POS are performed through a software provided with interactive menus.
